(19) Europäisches Patentamt
European Patent Office
Office européen des brevets

(11) **EP 2 896 970 B1**

(12) **EUROPEAN PATENT SPECIFICATION**

(45) Date of publication and mention
of the grant of the patent:
**28.03.2018 Bulletin 2018/13**

(51) Int Cl.:
***G01S 11/04*** $^{(2006.01)}$

(21) Application number: **14000178.5**

(22) Date of filing: **17.01.2014**

(54) **Method of kinematic ranging**

Verfahren zur kinematischen Entfernungsmessung

Procédé de télémétrie cinématique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.07.2015 Bulletin 2015/30**

(73) Proprietor: **HENSOLDT Sensors GmbH 82024 Taufkirchen (DE)**

(72) Inventors:
• **Nagel, Dieter**
**89155 Erbach (DE)**
• **Grüner, Wilhelm**
**89075 Ulm (DE)**
• **Kulig, Christian**
**85053 Ingolstadt (DE)**

(74) Representative: **LifeTech IP**
**Spies & Behrndt Patentanwälte PartG mbB**
**Elsenheimerstraße 47a**
**80687 München (DE)**

(56) References cited:
**EP-A1- 2 187 233    FR-A1- 2 923 300**

• **PASSERIEUX J M ET AL: "Optimal observer maneuver for bearings-only tracking", IEEE TRANSACTIONS ON AEROSPACE AND ELECTRONIC SYSTEMS, IEEE SERVICE CENTER, PISCATAWAY, NJ, US, vol. 34, no. 3, 1 July 1998 (1998-07-01), pages 777-788, XP002290216, ISSN: 0018-9251, DOI: 10.1109/7.705885**
• **A. LOGOTHETIS ET AL: "Comparison of suboptimal strategies for optimal own-ship maneuvers in bearings-only tracking", PROCEEDINGS OF THE 1998 AMERICAN CONTROL CONFERENCE. ACC (IEEE CAT. NO.98CH36207), vol. 6, 1 January 1998 (1998-01-01), pages 3334-3338, XP055122391, DOI: 10.1109/ACC.1998.703192**

**Description**

The invention relates to kinematic ranging techniques.

Kinematic ranging per se is a known electronic counter-counter-measure technique, in which the range of a moving airborne jammer may be estimated by use of a radar unit without the need for the unit to actively interrogate the jammer, i.e. the radar unit may work in a passive mode to detect and process the jammer signals. In the specific examples of the invention described below, the radar unit is an airborne detecting radar unit. Kinematic ranging is described for example in "Kinematic Ranging for IRST", SPIE Vol 1950, Acquisition, Tracking and Pointing VII (1993).

Passerieux, J.M.; Van Cappel, D., "Optimal observer maneuver for bearings-only tracking," in Aerospace and Electronic Systems, IEEE Transactions on , vol.34, no.3, pp.777-788, Jul 1998, XP002290216, ISSN: 0018-9251, DOI: 10.1109/7.705885 describes an observe manoeuvre, that is critical to ensure observability and to obtain an accurate target localization. Here, optimal control theory is applied to the determination of the course of a constant speed observer that minimizes an accuracy criterion deduced from the Fisher information matrix (FIM). Necessary conditions for optimal manoeuvre (Euler equations) are established and resolved, partly by analytical means and partly by an iterative numerical procedure.

Logothetis, A.; Isaksson, Alf; Evans, R.J., "Comparison of suboptimal strategies for optimal own-ship maneuvers in bearings-only tracking," in American Control Conference, 1998. Proceedings of the 1998, vol.6, no., pp.3334-3338 vol.6, 21-26 Jun 1998 DOI: 10.1109 / ACC.1998.703192 describes suboptimal optimization techniques for computing observer trajectories in the bearings-only tracking problem. Motion of the observer, e.g. through a ownship manoeuvre, improves the quality of track performance. Two mutual information measures and optimal trajectories were computed via dynamic programming. Thus, two suboptimal strategies were explored which considerably reduce the computational cost. In the first strategy a scalar function of the target state error covariance matrix is minimized, while in the second strategy approximate forward-reduced complexity-dynamic programming techniques are used.

EP 2 187 233 A1 describes a range estimation device and method using passive sensor(s), determining the characteristics of the ownship manoeuvering based on the range uncertainty estimation to the target.

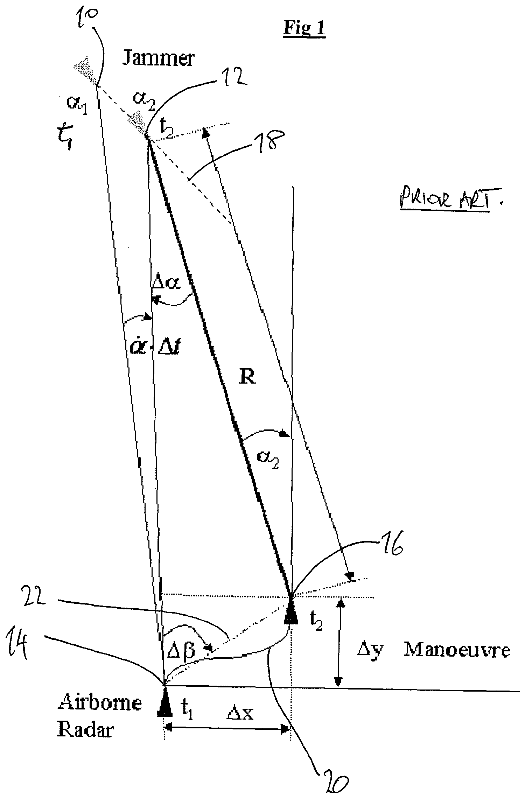

Referring to Figure 1, in a known kinematic ranging technique, an airborne jammer moves along a trajectory 18 from a first position 10 to a second position 12 in a time interval $\Delta t = t_2 - t_1$, during which an airborne detecting radar unit carries out a manoeuvre along a path 20 from a position 14 to a position 16, corresponding to a displacement 22 defined by displacement components $\Delta x$, $\Delta y$ in the x and y directions respectively. The change $\Delta \alpha$ in azimuth bearing angle of the jammer with respect to the airborne detecting radar unit between the times $t_1$ and $t_2$ is given by

$$\Delta \alpha = \alpha_1 + \frac{d\alpha}{dt} \cdot \Delta t - \alpha_2 \, ;$$

where $\alpha_1$ and $\alpha_2$ are the bearings in azimuth of the jammer at times $t_1$ and $t_2$ with respect to positions 14 and 16 respectively. The angle $\Delta \beta$ between the straight line connecting positions 14 and 12 and the displacement 22 is given by

$$\Delta \beta = \frac{\pi}{2} - \arctan \frac{\Delta y}{\Delta x} - \alpha_1 - \frac{d\alpha}{dt} \cdot \Delta t \, . \qquad \text{(Equation 1)}$$

$\Delta \beta$ is the angle in the azimuthal plane between the straight line joining the position of the airborne detector radar at time $t_1$ and the position of the jammer at $t_2$ and the straight line corresponding to the displacement of the airborne detector radar during the interval $\Delta t$. Using the sine rule, the range R of the jammer from the airborne detecting radar at time $t_2$ is given by

$$\frac{R}{\sin \Delta \beta} = \frac{\sqrt{\Delta x^2 + \Delta y^2}}{\sin \Delta \alpha} \, . \qquad \text{(Equation 2)}$$

The range R of the jammer from the second position 16 of the airborne detecting radar may be therefore be calculated by measuring the bearings $\alpha_1$, $\alpha_2$ in azimuth of the jammer at the times $t_1$, $t_2$ with respect to the airborne detecting radar unit, the rate of change $d\alpha/dt$ of the bearing in azimuth of the jammer with respect to the position 14, the components $\Delta x$, $\Delta y$ of the displacement 22 corresponding to the manoeuvre 20 of the airborne detecting radar, and the time interval $\Delta t$.

A disadvantage of the known method of kinematic ranging is that when the airborne detecting radar unit carries out a general manoeuvre 20, corresponding to a general displacement such as 22, the final result for the range R typically involves a significant level of uncertainty as a result of measurement errors associated with the values of $\alpha_1$, $\alpha_2$, $d\alpha/dt$, $\Delta t$, $\Delta x$ and $\Delta y$.

The present invention provides a method of kinematic ranging comprising the steps of:

(i) measuring the bearing $\alpha_1$ in azimuth of a jammer at a time $t_1$ with respect to a first position using an airborne radar detector located at the first position;

(ii) measuring the rate of change $d\alpha/dt$ of the bearing in azimuth of the jammer with respect to the first position using the airborne radar detector located at the first postion;

(iii) causing the airborne radar detector to carry out a manoeuvre such that it is displaced to a second position by a horizontal displacement d having orthogonal components $\Delta x$, $\Delta y$ in a time $\Delta t = t_2 - t_1$ and measuring the bearing $\alpha_2$ in azimuth of the jammer at time $t_2$ with respect to the second position using the airborne radar detector located at the second position, where $d = \sqrt{\Delta x^2 + \Delta y^2}$ ;

(iv) calculating the difference $\Delta\alpha$ in the bearing in azimuth of the jammer between the second and first positions;

characterised in that the components $\Delta x$, $\Delta y$ are calculated by the steps of:

(a) choosing a desired relative range accuracy $\sigma_R/R$ for the method;
(b) obtaining an estimated range $R_{est}$ of the jammer from the second position at time $t_2$;
(c) finding d on the basis of the relative range accuracy, the estimated range $R_{est}$, the variance $\sigma_{\Delta\alpha}^2$ in $\Delta\alpha$ and the variance $\sigma_d^2$ in d according to

$$\sigma_R = \frac{R}{d}\sqrt{(R^2 - d^2)\cdot\sigma_{\Delta\alpha}^2 + \sigma_d^2}$$

(d) calculating the components $\Delta x$, $\Delta y$ of the displacement d according to

$$\Delta x = \cos(\alpha_1 + \dot{\alpha}\cdot\Delta t)\cdot d$$

$$\Delta y = -\sin(\alpha_1 + \dot{\alpha}\cdot\Delta t)\cdot d$$

and also characterised in that the range R of the jammer from the second position is calculated according to

$$R = \frac{d}{\sin\Delta\alpha}.$$

The invention provides the advantage that the range R may be measured with a desired relative range accuracy by causing the airborne radar detector to carry out the manoeuvre d having the calculated displacement components $\Delta x$, $\Delta y$ in the horizontal plane.

In order to provide the possibility of a further increase in the accuracy of the determined range R, preferably the method further comprises the steps of

(i) evaluating the angle $\Delta\beta_1$ between the straight line joining the first position of the airborne detector radar and the position of the jammer at time $t_2$, and the straight line defined by the components $\Delta x$, $\Delta y$;
(ii) evaluating the angle $\Delta\beta_2$ between the straight line joining the first position of the airborne detector radar and the position of the jammer at time $t_2$, and the straight line defined by the components $-\Delta x$, $\Delta y$;
(iii) if $|\Delta\beta_1 - \pi/2| \leq |\Delta\beta_2 - \pi/2|$ then choosing the manoeuvre of the airborne detector radar such that its displacement has components $\Delta x$, $\Delta y$ and if $|\Delta\beta_1 - \pi/2| > |\Delta\beta_2 - \pi/2|$ then choosing the manoeuvre of the airborne detector radar such that its displacement has components $-\Delta x$, $\Delta y$.

In some embodiments, the method may be applied to the simultaneous determination of the range of two jammers, in which case the method preferably further includes the steps of:

(i) evaluating the angle $\Delta\beta_{11}$ between the straight line joining the first position of the airborne detector radar and the position of the first jammer at time $t_2$, and the straight line defined by the components $\Delta x$, $\Delta y$;

(ii) evaluating the angle $\Delta\beta_{12}$ between the straight line joining the first position of the airborne detector radar and the position of the second jammer at time $t_2$, and the straight line defined by the components $\Delta x$, $\Delta y$;

(iii) evaluating the angle $\Delta\beta_{21}$ between the straight line joining the first position of the airborne detector radar and the position of the first jammer at time $t_2$, and the straight line defined by the components $-\Delta x$, $\Delta y$;

(iv) evaluating the angle $\Delta\beta_{22}$ between the straight line joining the first position of the airborne detector radar and the position of the second jammer at time $t_2$, and the straight line defined by the components $-\Delta x$, $\Delta y$;

(v) if $|\Delta\beta_{11} + \Delta\beta_{12} - \pi| \leq |\Delta\beta_{21} + \Delta\beta_{22} - \pi|$ then choosing the manoeuvre of the airborne detector radar such that its displacement has components $\Delta x$, $\Delta y$ and if $|\Delta\beta_{11} + \Delta\beta_{12} - \pi| > |\Delta\beta_{21} + \Delta\beta_{22} - \pi|$ then choosing the manoeuvre of the airborne detector radar such that its displacement has components $-\Delta x$, $\Delta y$.

This ensures the greatest overall accuracy in the determined ranges of the two jammers.
Embodiments of the invention are described below by way of example only, and with reference to the accompanying drawings in which:

Figure 2    shows the relationship between the range R of a jammer and the displacement d of a manoeuvre of an airborne radar detector executed in a method of the invention in the case of a relative range accuracy of less than 20%;

Figure 3    illustrates the measurement of the range R of a jammer with minimum uncertainty;

Figure 4    illustrates a non-optimised manoeuvre of an airborne detector radar for estimating the range of multiple jammers; and

Figure 5    illustrates an alternative manoeuvre of an airborne detector radar for estimating the ranges of multiple jammers with improved accuracy.

Using Gauss' law in conjunction with Equation 2, the variance in the range R of the jammer is given by

$$\sigma_R^2 = \left(\frac{\partial R}{\partial(\Delta\beta)}\right)^2 \sigma_{\Delta\beta}^2 + \left(\frac{\partial R}{\partial(\Delta a)}\right)^2 \sigma_{\Delta a}^2 + \left(\frac{\partial R}{\partial d}\right)^2 \sigma_d^2 \qquad \text{(Equation 3)}$$

where $\sigma_{\Delta\beta}^2$, $\sigma_{\Delta\alpha}^2$, and $\sigma_d^2$ are the variances in the angles $\Delta\beta$, $\Delta\alpha$ and in the displacement d respectively. Inserting the derivatives of Equation 2 into Equation 3 gives an expression for the relative range accuracy $\sigma_R/R$:

$$\frac{\sigma_R^2}{R^2} = \cot^2(\Delta\beta)\sigma_{\Delta\beta}^2 + \frac{\sigma_{\Delta a}^2}{\tan^2(\Delta a)} + \frac{\sigma_d^2}{d^2},$$

which is minimised when

$$\cot^2(\Delta\beta) = 0$$

and $\Delta\alpha$ and d are as large as possible. $\cot^2(\Delta\beta) = 0$ if $\Delta\beta = \pi/2$; combining this with Equation 1 gives

$$\arctan\frac{\Delta y}{\Delta x} = -\alpha_1 - \dot{\alpha} \cdot \Delta t$$

or equivalently

$$\Delta y = -\tan(\alpha_1 + \dot{\alpha} \cdot \Delta t) \cdot \Delta x$$

For $\Delta\beta = \pi/2$, Equations 2 and 3 can be written as

$$R = \frac{d}{\sin(\Delta\alpha)}$$

and

$$\sigma_R = \frac{R}{d}\sqrt{(R^2 - d^2) \cdot \sigma_{\Delta\alpha}^2 + \sigma_d^2} \qquad \text{(Equation 4)}$$

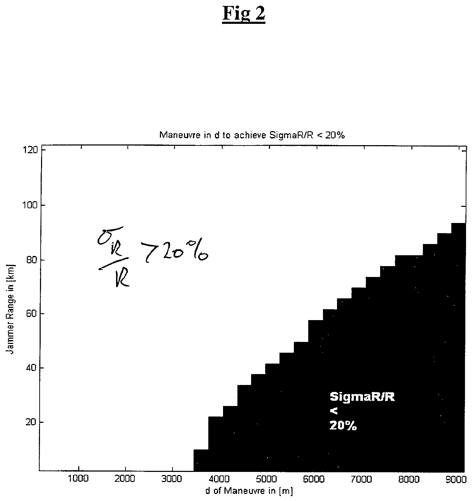

Figure 2 shows a plane through the function of Equation 4 at the value $\sigma_R/R = 0.2$ assuming accuracies $\sigma_d$, $\sigma_{\Delta\alpha}$ in the measurement of d and $\Delta\alpha$ of 700m and 1° respectively. If an initial value of the range R of 70 km is estimated, from Figure 2 this corresponds to a displacement d of ~7000m. The values $\alpha_1$, d$\alpha$/dt are measured when the airborne detector radar is at position 14, as described above with reference to Figure 1. The time $\Delta t$ taken for the airborne detector radar to carry out the manoeuvre 20 in order to cover the displacement d is d/v + dt where v is the velocity of the radar detector and dt is a tolerance value.

$$\Delta t = \frac{7000m}{250m/s} + 5s = 33s$$

Taking d = 7000 m , dt =5s and v =250 m/s, and assuming that $\alpha_1$ = -20° and $\dot{\alpha}$ = 0.2°/s, the components $\Delta x$, $\Delta y$ of the displacement d are

$$\Delta x = \cos(\alpha_1 + \dot{\alpha} \cdot \Delta t) \cdot d = \cos(-20° + 6.6°) \cdot d \approx 6810m$$

$$\Delta y = -\sin(\alpha_1 + \dot{\alpha} \cdot \Delta t) \cdot d = -\sin(-20° + 6.6°) \cdot d \approx 1620m$$

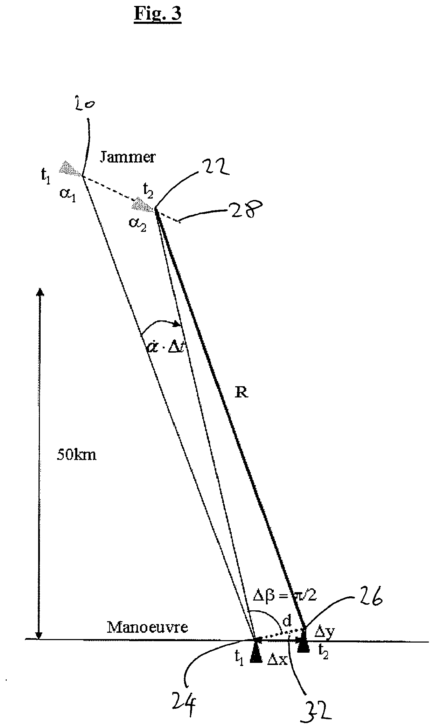

If the airborne detector radar carries out the manoeuvre 20 using these components of the displacement d, then the error in the measurement of the range R has a relative range accuracy of 20% or better. Figure 3 shows the displacement 32 of length d, the angle $\Delta\beta$ being 90° in this case. In Figure 3, the jammer moves from a position 20 to a position 22 along a trajectory 28 in a time interval $\Delta t$, during which the airborne detector radar moves from a position 24 to a position 26, these positions defining the displacement d.

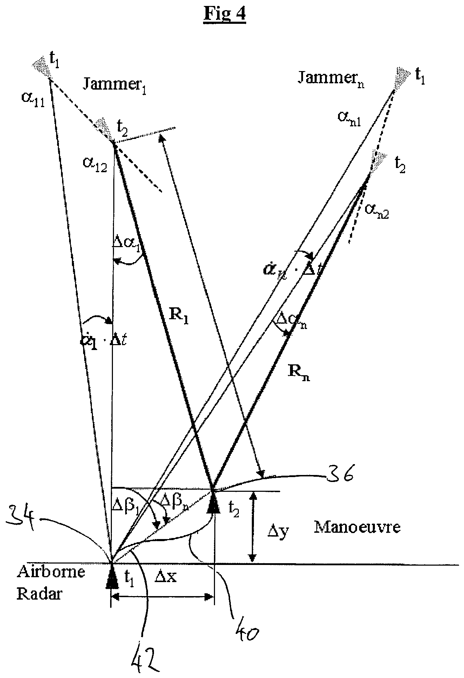

Figure 4 illustrates how the method may be applied to find the range of multiple jammers by increasing the number of manoeuvres carried out by a detecting airborne radar. In this case, n jammers are located and assessed at time $t_1$ and have bearings in azimuth of $\alpha_{11}....\alpha_{n1}$. The airborne detector radar carries out a manoeuvre on a path 40 from point 34 to the end 36 which define a displacement 42 of length d = $(\Delta x^2 + \Delta y^2)^{1/2}$. At time $t_2$ at the position 36, the measured bearings in azimuth of the jammers are $\alpha_{12}....\alpha_{n2}$. The differences in bearing $\Delta\alpha_n$ and the angle $\Delta\beta_n$ are

$$\Delta\alpha_n = \alpha_{n1} + \frac{d\alpha_n}{dt} \cdot \Delta t - \alpha_{n2}$$

$$\Delta\beta_n = \frac{\pi}{2} - \arctan\frac{\Delta y}{\Delta x} - \alpha_{n1} - \frac{d\alpha_n}{dt} \cdot \Delta t$$

and the range $R_n$ of the nth jammer is given by

$$R_n = \frac{\sin(\Delta\beta_n)\sqrt{\Delta x^2 + \Delta y^2}}{\sin \Delta \alpha_n} \; .$$

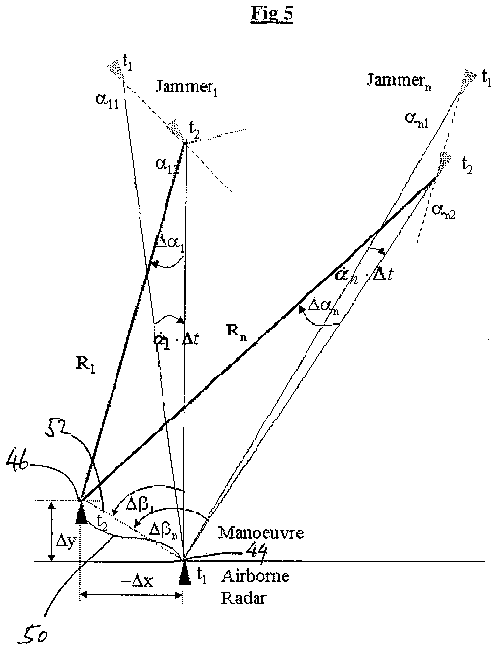

In Figure 4, the value $\Delta\beta_1$ is approximately 60° which leads to acceptable results, however $\Delta\beta_n$ may become close to zero, so that the relative range accuracy for the measurement of $R_n$ approaches a pole. To avoid this, the manoeuvre of the airborne detector radar may be carried out so that the displacement $\Delta x$ is negative, as shown in Figure 5; in this case a displacement 52 between positions 44 and 46 is achieved by a manoeuvre 50. Using this manoeuvre 50, $\Delta\beta_n$ is approximately 90°, so that the error in the range R is minimised, and $\Delta\beta_1$ is approximately 60°, which results in the accuracy of the measurement of $R_1$ also being acceptable. In this example, although the manoeuvre is optimised for jammer 1, the angle velocity $d\alpha/dt$ of jammer 1 increases $\Delta\beta_1$ without lowering $\Delta\beta_n$; this is because both jammers have the same direction of angle velocity $d\alpha/dt$.

**Claims**

1.  A method of kinematic ranging comprising the steps of:

(i) measuring the bearing $\alpha_1$ in azimuth of a jammer at a time $t_1$ with respect to a first position using an airborne radar detector located at the first position;
(ii) measuring the rate of change $d\alpha/dt$ of the bearing in azimuth of the jammer with respect to the first position using the airborne radar detector located at the first position;
(iii) causing the airborne radar detector to carry out a manoeuvre such that it is displaced to a second position by a horizontal displacement d having orthogonal components $\Delta x$, $\Delta y$ in a time $\Delta t = t_2 - t_1$ and measuring the bearing $\alpha_2$ in azimuth of the jammer at time $t_2$ with respect to the second position using the airborne radar detector located at the second position, where $d = \sqrt{\Delta x^2 + \Delta y^2}$ ;
(iv) calculating the difference $\Delta\alpha$ in the bearing in azimuth of the jammer between the second and first positions;

**characterised in that** the components $\Delta x$, $\Delta y$ are calculated by the steps of:

(a) choosing a desired relative range accuracy $\sigma_R/R$ for the method;
(b) obtaining an estimated range $R_{est}$ of the jammer from the second position at time $t_2$;
(c) finding d, under the assumption that $\Delta\beta = \pi/2$, $\Delta\beta$ being the angle between the straight line joining the position of the airborne detector radar at time $t_1$ and the position of the jammer at $t_2$ and the straight line corresponding to the displacement of the airborne detector radar during the interval $\Delta t$, on the basis of the relative range accuracy, the estimated range $R_{est}$, the variance $\sigma_{\Delta\alpha}^2$ in $\Delta\alpha$ and the variance $\sigma_d^2$ in d

$$\sigma_R = \frac{R}{d}\sqrt{(R^2 - d^2)\cdot\sigma_{\Delta\alpha}^2 + \sigma_d^2}$$

(d) calculating the components $\Delta x$, $\Delta y$ of the displacement d according to

$$\Delta x = \cos(\alpha_1 + \dot{\alpha}\cdot\Delta t)\cdot d$$

$$\Delta y = -\sin(\alpha_1 + \dot{\alpha}\cdot\Delta t)\cdot d$$

and **characterised in that** the range R of the jammer from the second position is calculated according to

$$R = \frac{d}{\sin \Delta\alpha} \; .$$

**2.** A method according to claim 1, further comprising the steps of:

(i) evaluating the angle $\Delta\beta_1$ between the straight line joining the first position of the airborne detector radar and the position of the jammer at time $t_2$, and the straight line defined by the components $\Delta x$, $\Delta y$;
(ii) evaluating the angle $\Delta\beta_2$ between the straight line joining the first position of the airborne detector radar and the position of the jammer at time $t_2$, and the straight line defined by the components $-\Delta x$, $\Delta y$;
(iii) if $|\Delta\beta_1 - \pi/2| \leq |\Delta\beta_2 - \pi/2|$ then choosing the manoeuvre of the airborne detector radar such that its displacement has components $\Delta x$, $\Delta y$ and if $|\Delta\beta_1 - \pi/2| > |\Delta\beta_2 - \pi/2|$ then choosing the manoeuvre of the airborne detector radar such that its displacement has components $-\Delta x$, $\Delta y$.

**3.** A method according to claim 1 wherein the range of a second jammer is also determined, and wherein the method comprises the steps of:

(i) evaluating the angle $\Delta\beta_{11}$ between the straight line joining the first position of the airborne detector radar and the position of the first jammer at time $t_2$, and the straight line defined by the components $\Delta x$, $\Delta y$;
(ii) evaluating the angle $\Delta\beta_{12}$ between the straight line joining the first position of the airborne detector radar and the position of the second jammer at time $t_2$, and the straight line defined by the components $\Delta x$, $\Delta y$;
(iii) evaluating the angle $\Delta\beta_{21}$ between the straight line joining the first position of the airborne detector radar and the position of the first jammer at time $t_2$, and the straight line defined by the components $-\Delta x$, $\Delta y$;
(iv) evaluating the angle $\Delta\beta_{22}$ between the straight line joining the first position of the airborne detector radar and the position of the second jammer at time $t_2$, and the straight line defined by the components $-\Delta x$, $\Delta y$;
(v) if $|\Delta\beta_{11} + \Delta\beta_{12} - \pi| \leq \Delta\beta_{21} + \Delta\beta_{22} - \pi|$ then choosing the manoeuvre of the airborne detector radar such that its displacement has components $\Delta x$, $\Delta y$ and if $|\Delta\beta_{11} + \Delta\beta_{12} - \pi| > |\Delta\beta_{21} + \Delta\beta_{22} - \pi|$ then choosing the manoeuvre of the airborne detector radar such that its displacement has components $-\Delta x$, $\Delta y$.

**Patentansprüche**

**1.** Verfahren zur kinematischen Entfernungsmessung, umfassend die folgenden Schritte:

(i) Messen der Lage $\alpha_1$ im Azimut eines Störers zu einem Zeitpunkt $t_1$ in Bezug auf eine erste Position unter Verwendung eines luftgestützten Radardetektors, der sich an der ersten Position befindet;
(ii) Messen der Änderungsrate $d\alpha/dt$ der Lage im Azimut des Störers in Bezug auf die erste Position unter Verwendung des luftgestützten Radardetektors, der sich an der ersten Position befindet;
(iii) Bewirken, dass der luftgestützte Radardetektor ein Manöver ausführt, so dass er durch eine horizontale Verschiebung d mit orthogonalen Komponenten $\Delta x$, $\Delta y$ in einer Zeit $\Delta t = t_2 - t_1$ in eine zweite Position verschoben wird, und Messen der Lage $\alpha_2$ im Azimut des Störers zur Zeit $t_2$ in Bezug auf die zweite Position unter Verwendung des luftgestützten Radardetektors, der sich an der zweiten Position befindet, wobei $d = \sqrt{\Delta x^2 + \Delta y^2}$;
(iv) Berechnen der Differenz $\Delta\alpha$ in der Lage im Azimut des Störers zwischen der zweiten und der ersten Position;

**dadurch gekennzeichnet, dass** die Komponenten $\Delta x$, $\Delta y$ durch die folgenden Schritte berechnet werden:

(a) Wählen einer gewünschten relativen Entfernungsgenauigkeit $\sigma_R/R$ für das Verfahren;
(b) Erhalten einer geschätzten Entfernung $R_{schätz}$ des Störers von der zweiten Position zum Zeitpunkt $t_2$;
(c) Finden von d, unter der Annahme, dass $\Delta\beta = \pi/2$ ist, wobei $\Delta\beta$ der Winkel zwischen der Geraden, die die Position des luftgestützten Detektorradars zum Zeitpunkt $t_1$ und die Position des Störers zu $t_2$ verbindet, und der Geraden, die der Verschiebung des luftgestützten Detektorsradars während des Intervalls $\Delta t$ entspricht, auf Basis der relativen Entfernungsgenauigkeit, der geschätzten Entfernung $R_{schätz}$, der Varianz $\sigma_{\Delta\alpha}^2$ in $\Delta\alpha$, und der Varianz $\sigma_d^2$ in d gemäß

$$\sigma_R = \frac{R}{d}\sqrt{(R^2 - d^2) \cdot \sigma_{\Delta\alpha}^2 + \sigma_d^2}$$

(d) Berechnen der Komponenten $\Delta x$, $\Delta y$ der Verschiebung d gemäß

$$\Delta x = \cos(\alpha_1 + \dot{\alpha} \cdot \Delta t) \cdot d$$

$$\Delta y = -sin(\alpha_1 + \dot{\alpha} \cdot \Delta t) \cdot d$$

und **dadurch gekennzeichnet, dass** die Entfernung R des Störers von der zweiten Position gemäß

$$R = \frac{d}{sin\Delta\alpha}$$

berechnet wird.

2. Verfahren nach Anspruch 1, ferner umfassend die folgenden Schritte:

(i) Auswerten des Winkels $\Delta\beta_1$ zwischen der geraden Linie, die die erste Position des luftgestützten Detektorradars und die Position des Störers zum Zeitpunkt $t_2$ verbindet, und der geraden Linie, die durch die Komponenten $\Delta x$, $\Delta y$ definiert ist;
(ii) Auswerten des Winkels $\Delta\beta_2$ zwischen der geraden Linie, die die erste Position des luftgestützten Detektorradars und die Position des Störers zum Zeitpunkt $t_2$ verbindet, und der geraden Linie, die durch die Komponenten $-\Delta x$, $\Delta y$ definiert ist;
(iii) wenn $|\Delta\beta_1 - \pi/2| \leq |\Delta\beta_2 - \pi/2|$, dann Wählen des Manövers des luftgestützten Detektorradars derart, dass seine Verschiebung die Komponenten $\Delta x$, $\Delta y$ aufweist, und wenn, $|\Delta\beta_1 - \pi/2| > |\Delta\beta_2 - \pi/2|$, dann Wählen des Manövers des luftgestützten Detektorradars, so dass seine Verschiebung die Komponenten $-\Delta x$, $\Delta y$ aufweist.

3. Verfahren nach Anspruch 1, wobei die Entfernung eines zweiten Störers ebenfalls bestimmt wird, und wobei das Verfahren die folgenden Schritte umfasst:

(i) Auswerten des Winkels $\Delta\beta_{11}$ zwischen der geraden Linie, die die erste Position des luftgestützten Detektorradars und die Position des ersten Störers zum Zeitpunkt $t_2$ verbindet, und der geraden Linie, die durch die Komponenten $\Delta x$, $\Delta y$ definiert ist;
(ii) Auswerten des Winkels $\Delta\beta_{12}$ zwischen der geraden Linie, die die erste Position des luftgestützten Detektorradars und die Position des zweiten Störers zum Zeitpunkt $t_2$ verbindet, und der geraden Linie, die durch die Komponenten $\Delta x$, $\Delta y$ definiert ist;
(iii) Auswerten des Winkels $\Delta\beta_{21}$ zwischen der geraden Linie, die die erste Position des luftgestützten Detektorradars und die Position des ersten Störers zum Zeitpunkt $t_2$ verbindet, und der geraden Linie, die durch die Komponenten $-\Delta x$, $\Delta y$ definiert ist;
(iv) Auswerten des Winkels $\Delta\beta_{22}$ zwischen der geraden Linie, die die erste Position des luftgestützten Detektorradars und die Position des zweiten Störers zum Zeitpunkt $t_2$ verbindet, und der geraden Linie, die durch die Komponenten $-\Delta x$, $\Delta y$ definiert ist;
(v) wenn $|\Delta\beta_{11} + \Delta\beta_{12} - \pi| \leq |\Delta\beta_{21} + \Delta\beta_{22} - \pi|$, dann Wählen des Manövers des luftgestützten Detektorradars derart, dass seine Verschiebung die Komponenten $\Delta x$, $\Delta y$ aufweist, und wenn $|\Delta\beta_{11} + \Delta\beta_{12} - \pi| > |\Delta\beta_{21} + \Delta\beta_{22} - \pi|$, dann Wählen des Manövers des luftgestützten Detektorradars, so dass seine Verschiebung die Komponenten $-\Delta x$, $\Delta y$ aufweist.

**Revendications**

1. Procédé de télémétrie cinématique comprenant les étapes consistant à :

(i) mesurer le relèvement $\alpha_1$ en azimut d'un brouilleur à un temps $t_1$ par rapport à une première position en utilisant un détecteur radar embarqué situé à la première position ;
(ii) mesurer la vitesse de variation $d\alpha/dt$ du relèvement en azimut du brouilleur par rapport à la première position en utilisant le détecteur radar embarqué situé à la première position ;
(iii) amener le détecteur radar embarqué à réaliser une manoeuvre de telle sorte qu'il soit déplacé jusqu'à une deuxième position par un déplacement horizontal d ayant des composantes orthogonales $\Delta x$, $\Delta y$ dans un temps

$\Delta t = t_2 - t_1$ et mesurer le relèvement $\alpha_2$ en azimut du brouilleur au temps $t_2$ par rapport à la deuxième position en utilisant le détecteur radar embarqué situé à la deuxième position, où $d = \sqrt{\Delta x^2 + \Delta y^2}$ ;

(iv) calculer la différence $\Delta\alpha$ de relèvement en azimut du brouilleur entre la première et la deuxième position ;

**caractérisé en ce que** les composantes $\Delta x$, $\Delta y$ sont calculées par les étapes consistant à :

(a) choisir une précision de distance relative souhaitée $\sigma_R/R$ pour le procédé ;

(b) obtenir une distance estimée $R_{est}$ du brouilleur depuis la deuxième position au temps $t_2$ ;

(c) trouver d, dans l'hypothèse où $\Delta\beta = \pi/2$, $\Delta\beta$ étant l'angle entre la ligne droite reliant la position du radar de détection embarqué au temps $t_1$ et la position du brouilleur à $t_2$ et la ligne droite correspondant au déplacement du radar de détection embarqué pendant l'intervalle $\Delta t$, en fonction de la précision de distance relative, de la distance estimée $R_{est}$, de la variance $\sigma_{\Delta\alpha}^2$ de $\Delta\alpha$ et de la variance $\sigma_d^2$ de d selon

$$\sigma_R = \frac{R}{d}\sqrt{(R^2 - d^2) \cdot \sigma_{\Delta\alpha}^2 + \sigma_d^2}$$

(d) calculer les composantes $\Delta x$, $\Delta y$ du déplacement d selon

$$\Delta \mathrm{x} \; = \; \cos\left(\alpha_1 + \dot{\alpha} \cdot \Delta \mathrm{t}\right) \cdot \mathrm{d}$$

$$\Delta \mathrm{y} \; = \; -\sin\left(\alpha_1 + \dot{\alpha} \cdot \Delta \mathrm{t}\right) \cdot \mathrm{d}$$

et **caractérisé en ce que** la distance R du brouilleur depuis la deuxième position est calculée selon

$$R = \frac{d}{\sin\Delta\alpha}.$$

2. Procédé selon la revendication 1, comprenant en outre les étapes consistant à :

(i) évaluer l'angle $\Delta\beta_1$ entre la ligne droite reliant la première position du radar de détection embarqué et la position du brouilleur au temps $t_2$, et la ligne droite définie par les composantes $\Delta x$, $\Delta y$ ;

(ii) évaluer l'angle $\Delta\beta_2$ entre la ligne droite reliant la première position du radar de détection embarqué et la position du brouilleur au temps $t_2$, et la ligne droite définie par les composantes $-\Delta x$, $\Delta y$ ;

(iii) si $|\Delta\beta_1 - \pi/2| \leq |\Delta\beta_2 - \pi/2|$, choisir alors la manoeuvre du radar de détection embarqué de telle sorte que son déplacement ait les composantes $\Delta x$, $\Delta y$, et si $|\Delta\beta_1 - \pi/2| > |\Delta\beta_2 - \pi/2|$, choisir alors la manoeuvre du radar de détection embarqué de telle sorte que son déplacement ait les composantes $-\Delta x$, $\Delta y$.

3. Procédé selon la revendication 1 dans lequel la distance d'un deuxième brouilleur est également déterminée, et le procédé comprenant les étapes consistant à :

(i) évaluer l'angle $\Delta\beta_{11}$ entre la ligne droite reliant la première position du radar de détection embarqué et la position du premier brouilleur au temps $t_2$, et la ligne droite définie par les composantes $\Delta x$, $\Delta y$ ;

(ii) évaluer l'angle $\Delta\beta_{12}$ entre la ligne droite reliant la première position du radar de détection embarqué et la position du deuxième brouilleur au temps $t_2$, et la ligne droite définie par les composantes $\Delta x$, $\Delta y$ ;

(iii) évaluer l'angle $\Delta\beta_{21}$ entre la ligne droite reliant la première position du radar de détection embarqué et la position du premier brouilleur au temps $t_2$, et la ligne droite définie par les composantes $-\Delta x$, $\Delta y$ ;

(iv) évaluer l'angle $\Delta\beta_{22}$ entre la ligne droite reliant la première position du radar de détection embarqué et la position du deuxième brouilleur au temps $t_2$, et la ligne droite définie par les composantes $-\Delta x$, $\Delta y$ ;

(v) si $|\Delta\beta_{11} + \Delta\beta_{12} - \pi| \leq |\Delta\beta_{21} + \Delta\beta_{22} - \pi|$, choisir alors la manoeuvre du radar de détection embarqué de telle sorte que son déplacement ait les composantes $\Delta x$, $\Delta y$, et si $|\Delta\beta_{11} + \Delta\beta_{12} - \pi| > |\Delta\beta_2 + \Delta\beta_{22} - \pi|$, choisir alors la manoeuvre du radar de détection embarqué de telle sorte que son déplacement ait les composantes $-\Delta x$, $\Delta y$.

**Fig 1**

PRIOR ART.

Jammer

Airborne
Radar

Manoeuvre

## Fig 2

Maneuvre in d to achieve SigmaR/R < 20%

$$\frac{\sigma_R}{R} > 20\%$$

SigmaR/R
<
20%

Jammer Range in [km]

d of Maneuvre in [m]

## Fig. 3

## Fig 4

## Fig 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2187233 A1

### Non-patent literature cited in the description

- Kinematic Ranging for IRST. Acquisition, Tracking and Pointing VII. SPIE, 1993, vol. 1950
- **PASSERIEUX, J.M. ; VAN CAPPEL, D.** Optimal observer maneuver for bearings-only tracking. *Aerospace and Electronic Systems, IEEE Transactions on,* July 1998, vol. 34 (3), ISSN 0018-9251, 777-788
- **LOGOTHETIS, A. ; ISAKSSON, ALF ; EVANS, R.J.** Comparison of suboptimal strategies for optimal own-ship maneuvers in bearings-only tracking. *American Control Conference, 1998. Proceedings of the 1998,* 21 June 1998, vol. 6, 3334-3338